# EUROPEAN PATENT APPLICATION

(11) **EP 3 492 179 A1**
(43) Date of publication of application: **05.06.2019**
(21) Application number: 17833842.2
(22) Date of filing: 01.06.2017
(51) Int. Cl.: B05B 3/10, B05B 5/04, B05B 15/00, G05B 19/418, G06K 19/077, G06Q 10/06

(54) **ASSEMBLY SUITABILITY DETERMINATION DEVICE, METHOD, AND PROGRAM, AND RECORDING MEDIUM**

(30) Priority: 28.07.2016 JP 2016148574
(71) Applicant: ABB K.K., 1-1, Osaki 2-chome Shinagawa-ku Tokyo 141-6022 (JP)
(72) Inventor: KITAGAWA, Masaaki, Tokyo 141-6022 (JP); FOUVET, Michel, Shanghai 201319 (CN); RODRIGUES, Jose, Shanghai 201319 (CN)
(74) Representative: Wegner, Hans
(86) International application number: PCT/JP2017/020499
(87) International publication number: WO 2018/020832

(57) **Abstract**

According to the present invention, an assembly suitability determination device determines suitability of assembly of a component to a paint device. The assembly suitability determination device includes an assembly suitability information recording unit, and an assembly suitability determination unit. The assembly suitability information recording unit records model information representing a model of the component and model information representing a model of a device-side component that receives the component on the paint device, and is suitable for the assembly of the component while associating the model information on the component with the model information on the device-side component. The assembly suitability determination unit determines the suitability of the assembly based on the model information on the component, the model information on the device-side component, and a recorded content of the assembly suitability information recording unit.

## Description

### TECHNICAL FIELD

The present invention relates to assembly of components to a paint device.

### BACKGROUND ART

Hitherto, there is known a paint device that uses an air motor to rotate a rotary atomizer head (for example, refer to Patent Literature 1). The rotary atomizer head is to be assembled to the paint device.

### CITATION LIST

### PATENT DOCUMENT

Patent Document 1: JP 2002-192022A

### SUMMARY OF INVENTION

However, types of the rotary atomizer head are various, and a type suitable for a paint device subject to the assembly needs to be assembled. A rotary atomizer head of an unsuitable type may cause a defective painting even if the rotary atomizer head is assembled to the paint device. It should be noted that such a problem is not limited to the rotary atomizer head, and may occur when other components are assembled to the paint device.

It is therefore an object of the present invention to determine suitability of the assembly of a certain component to the paint device.

According to the present invention, an assembly suitability determination device for determining suitability of assembly of a component to a paint device, includes: an assembly suitability information recording unit that records model information representing a model of the component and model information representing a model of a device-side component that receives the component on the paint device, and is suitable for the assembly of the component while associating the model information on the component with the model information on the device-side component; and an assembly suitability determination unit that determines the suitability of the assembly based on the model information on the component, the model information on the device-side component, and a recorded content of the assembly suitability information recording unit.

According to the thus constructed assembly suitability determination device, an assembly suitability determination device for determining suitability of assembly of a component to a paint device can be provided. An assembly suitability information recording unit records model information representing a model of the component and model information representing a model of a device-side component that receives the component on the paint device, and is suitable for the assembly of the component while associating the model information on the component with the model information on the device-side component. An assembly suitability determination unit determines the suitability of the assembly based on the model information on the component, the model information on the device-side component, and a recorded content of the assembly suitability information recording unit.

According to the present invention, the assembly suitability determination device may include a past assembly suitability information recording unit that records the model information representing the model of the component and model information representing a model of a device-side component that receives the component on the paint device, and was previously suitable, but is not presently suitable for the assembly of the component while associating the model information on the component with the model information on the device-side component, wherein the assembly suitability determination unit determines the suitability of the assembly based on the model information on the component, the model information on the device-side component, and a recorded content of the past assembly suitability information recording unit.

According to the assembly suitability determination device of the present invention, the component and the device-side component each may include a component information recording unit that records component information for identifying the component; and the component information may be provided from the component information recording unit to the assembly suitability determination device via wireless communication.

According to the assembly suitability determination device of the present invention, the component may be a rotary atomizer head.

According to the present invention, an assembly suitability determination method of determining suitability of assembly of a component to a paint device, includes: recording model information representing a model of the component and model information representing a model of a device-side component that receives the component on the paint device, and is suitable for the assembly of the component while associating the model information on the component with the model information on the device-side component; and determining the suitability of the assembly based on the model information on the component, the model information on the device-side component, and a recorded content of the recording.

The present invention is a program of instructions for execution by a computer to perform an assembly suitability determination process of determining suitability of assembly of a component to a paint device, the assembly suitability determination process including: recording model information representing a model of the component and model information representing a model of a device-side component that receives the component on the paint device, and is suitable for the assembly of the component while associating the model information on the component with the model information on the device-side component; and determining the suitability of the assembly based on the model information on the component, the model information on the device-side component, and a recorded content of the recording.

The present invention is a non-transitory computer-readable medium having a program of instructions for execution by a computer to perform an assembly suitability determination process of determining suitability of assembly of a component to a paint device, the assembly suitability determination process including: recording model information representing a model of the component and model information representing a model of a device-side component that receives the component on the paint device, and is suitable for the assembly of the component while associating the model information on the component with the model information on the device-side component; and determining the suitability of the assembly based on the model information on the component, the model information on the device-side component, and a recorded content of the recording.

If the component numbers are recorded by means of engraving surfaces of the component and the device-side component or by employing name plates, visual recognition of the component numbers becomes difficult due to the contamination of the surfaces by the paint or the like. However, according to the present invention, a paint device may include a component, wherein the component includes a component information recording unit that records component information for identifying the component so as to be read via wireless communication. Thus, the component information can be read via the wireless communication, regardless of the contamination of the surfaces by the paint or the like.

### BRIEF DESCRIPTION OF DRAWINGS

FIG. 1 is a front view of a paint device and an assembly suitability determination device 12 according to an embodiment of the present invention;
FIG. 2 is a functional block diagram showing a configuration of the assembly suitability determination device 12;
FIG. 3 is an example of a recorded content of the model number recording unit 12a;
FIG. 4 is an example of a recorded content of the assembly suitable model number recording unit 12c;
FIG. 5 is an example of a recorded content of the past assembly suitable model number recording unit 12e; and
FIG. 6 is a table for showing an example in which the model number recording unit 12a, the assembly suitable model number recording unit 12c, and the past assembly suitable model number recording unit 12e are unified.

### Modes for Carrying out the Invention

A description will now be given of embodiments of the present invention referring to drawings.

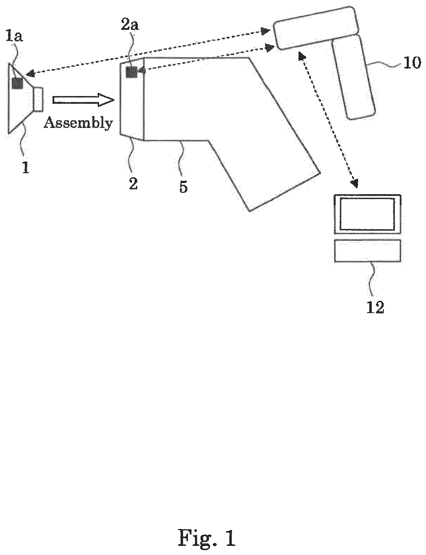

FIG. 1 is a front view of a paint device and an assembly suitability determination device 12 according to an embodiment of the present invention. The paint device includes an SA ring 2 and a body unit 5. A rotary atomizer head 1 is assembled to the SA ring 2 of the paint device. The SA ring 2 is a device-side component for receiving the rotary atomizer head 1 on the paint device. The rotary atomizer head 1 rotates at a high speed, and is configured to atomize and spray paint supplied from a paint supply source, not shown. The SA ring 2 serves to give directivity to sprayed paint particles. The SA ring 2 is attached to the body unit 5, and the body unit 5 stores widely-known various components (such as an air motor, valves, and a booster), which are not shown, of the paint device.

The rotary atomizer head (component) 1 and the SA ring (device-side component) 2 respectively include component information recording units 1a and 2a for recording component information for identifying components. It should be noted that the component information is a component number, and the component information recording units 1a and 2a are IC tags in this embodiment.

It should be noted that the body unit 5 and the widely-known various components, not shown, of the paint device may be components to be assembled to the paint device or device-side components, and may include component information recording units (such as IC tags).

An IC tag reader 10 reads the component numbers from the component information recording units 1a and 2a via wireless communication (such as wireless communication using electric wave, and, hereinafter, the same holds true for the wireless communication), and provides the read component numbers to the assembly suitability determination device 12 via wireless communication.

It should be noted that as long as the component number is read via the wireless communication, and is provided for the assembly suitability determination device 12, the component information recording units 1a and 2a are not limited to the IC tags, and may be coils, for example. In such a case, in place of the IC tag reader 10, a certain device for generating a magnetic field reads the component numbers from the component information recording units 1a and 2a.

It should be noted that the component information recording units 1a and 2a are read via the wireless communication, and, thus, even when surfaces of the rotary atomizer head (component) 1 and the SA ring (device-side component) 2 are dirty due to contamination by the paint or the like, the component numbers can be read out. If the component numbers are recorded by means of engraving surfaces of the rotary atomizer head (component) 1 and the SA ring (device-side component) 2 or by employing name plates, visual recognition of the component numbers becomes difficult due to the contamination of the surfaces by the paint or the like, which constitutes remarkable contrast to this embodiment.

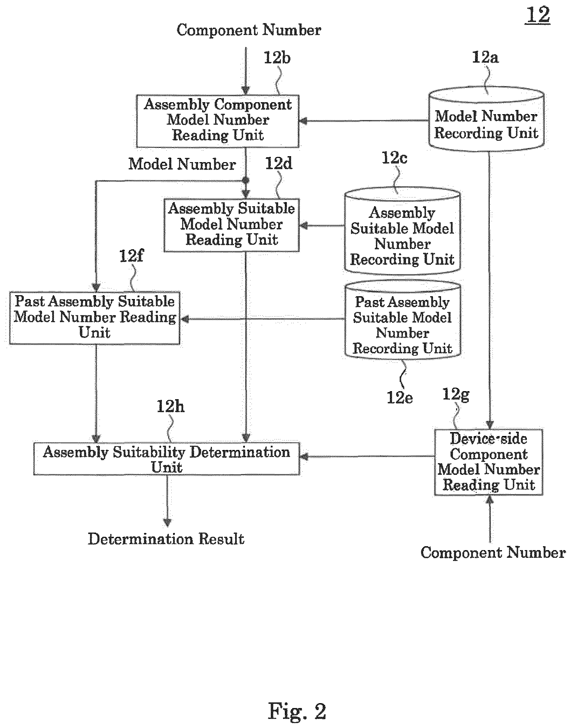

FIG. 2 is a functional block diagram showing a configuration of the assembly suitability determination device 12. The assembly suitability determination device 12 determines suitability of the assembly of the rotary atomizer head (component) 1 to (the SA ring 2 of) the paint device. The assembly suitability determination device 12 includes a model number recording unit 12a, an assembly component model number reading unit 12b, an assembly suitable model number recording unit 12c, an assembly suitable model number reading unit 12d, a past assembly suitable model number recording unit 12e, a past assembly suitable model number reading unit 12f, a device-side component model number reading unit 12g, and an assembly suitability determination unit 12h.

The model number recording unit 12a records the component numbers, model numbers, which are types of model information, and component names of the rotary atomizer head (component) 1 and the SA ring (device-side component) 2 associated with one another. The model information indicates a model of a component. The model number is a number indicating the model of the component. Components common in the model have the same model number.

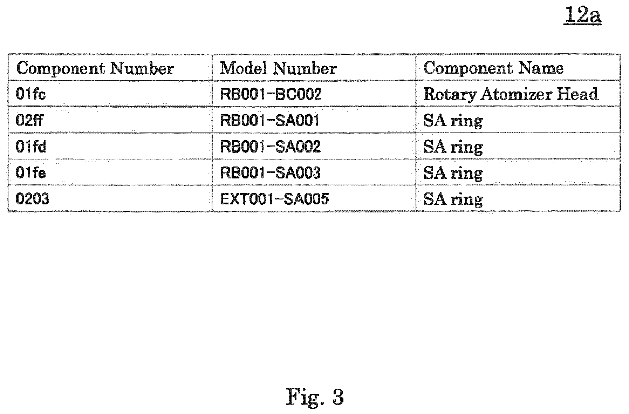

FIG. 3 is an example of a recorded content of the model number recording unit 12a. One type of the rotary atomizer head (component) 1 and four types of the SA ring (device-side component) 2 are recorded. It should be noted that the component name does not always need to be recorded.

The assembly component model number reading unit 12b receives the component number of the rotary atomizer head (component) 1 from the component information recording unit 1a via the IC tag reader 10. Further, the assembly component model number reading unit 12b reads the model number associated with the component number of the rotary atomizer head (component) 1 from the model number recording unit 12a, and provides the assembly suitable model number reading unit 12d and the past assembly suitable model number reading unit 12f with the model number.

The device-side component model number reading unit 12g receives the component number of the SA ring (device-side component) 2 from the component information recording unit 2a via the IC tag reader 10. Further, the device-side component model number reading unit 12g reads the model number associated with the component number of the SA ring (device-side component) 2 from the model number recording unit 12a, and provides the assembly suitability determination unit 12h with the model number.

The assembly suitable model number recording unit 12c records model information on the rotary atomizer head (component) 1 and model information indicating models of the SA ring (device-side component) 2 suitable for the assembly for the rotary atomizer head (component) 1 associated with each other.

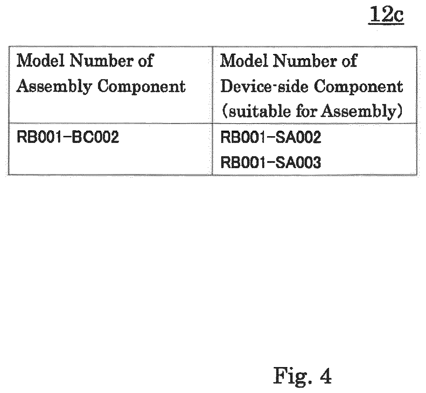

FIG. 4 is an example of a recorded content of the assembly suitable model number recording unit 12c. The model number of the rotary atomizer head (component) 1 and the model numbers (assembly suitable model numbers) of the SA ring (device-side component) 2 suitable for the assembly thereof are recorded.

The assembly suitable model number reading unit 12d receives the model number of the rotary atomizer head (component) 1 from the assembly component model number reading unit 12b, and reads the model information (assembly suitable model number) on the SA ring (device-side component) 2 associated with the model number from the assembly suitable model number recording unit 12c.

The past assembly suitable model number recording unit 12e records model information on the rotary atomizer head (component) 1 and model information indicating models of the SA ring (device-side components) 2 suitable for the assembly for the rotary atomizer head (component) 1 in the past, but not suitable at present associated with each other.

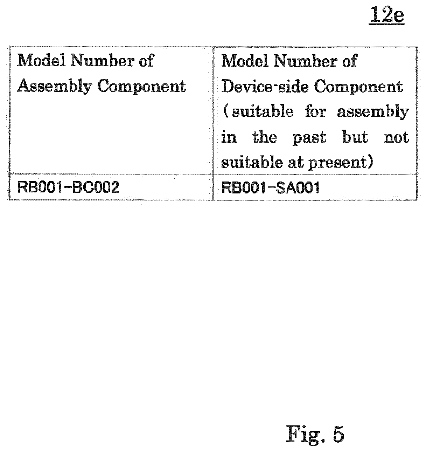

FIG. 5 is an example of a recorded content of the past assembly suitable model number recording unit 12e. The model number of the rotary atomizer head (component) 1 and the model number (past assembly suitable model number) of the SA ring (device-side component) 2 suitable for the assembly thereof in the past but not suitable at present are recorded.

The past assembly suitable model number reading unit 12f receives the model number of the rotary atomizer head (component) 1 from the assembly component model number reading unit 12b, and reads the model information on the SA ring (device-side components) 2 associated with the model number from the past assembly suitable model number recording unit 12e.

The assembly suitability determination unit 12h determines suitability of the assembly based on the model number of the rotary atomizer head (component) 1, the model number of the SA ring (device-side component) 2, the recorded content of the assembly suitable model number recording unit 12c, and the recorded content of the past assembly suitable model number recording unit 12e.

For example, in present embodiment,
(1) The assembly suitable model number reading unit 12d reads assembly suitable model numbers based on the model number of the rotary atomizer head (component) 1 and the recorded content of the assembly suitable model number recording unit 12c, and provides the assembly suitability determination unit 12h with the assembly suitable model numbers.
(2) The past assembly suitable model number reading unit 12f reads past assembly suitable model numbers based on the model number of the rotary atomizer head (component) 1 and the recorded content of the past assembly suitable model number recording unit 12e, and provides the assembly suitability determination unit 12h with the past assembly suitable model numbers.
(3) The device-side component model number reading unit 12g provides the assembly suitability determination unit 12h with the model number of the SA ring (device-side component) 2.
(4) The assembly suitability determination unit 12h determines the assembly suitability based on whether or not the model number of the SA ring (device-side component) 2 matches the assembly suitable model numbers or the past assembly suitable model numbers.

If the model number of the SA ring (device-side component) 2 matches the assembly suitable model number (recorded in the assembly suitable model number recording unit 12c), it is determined that the rotary atomizer head (component) 1 is suitable for the assembly. Otherwise, it is determined that the rotary atomizer head (component) 1 is not suitable for the assembly. It should be noted that if the model number of the SA ring (device-side component) 2 matches the past assembly suitable model number (recorded in the past assembly suitable model number recording unit 12e), it is determined that the rotary atomizer head (component) 1 is not suitable for the assembly, but was suitable for the assembly in the past.

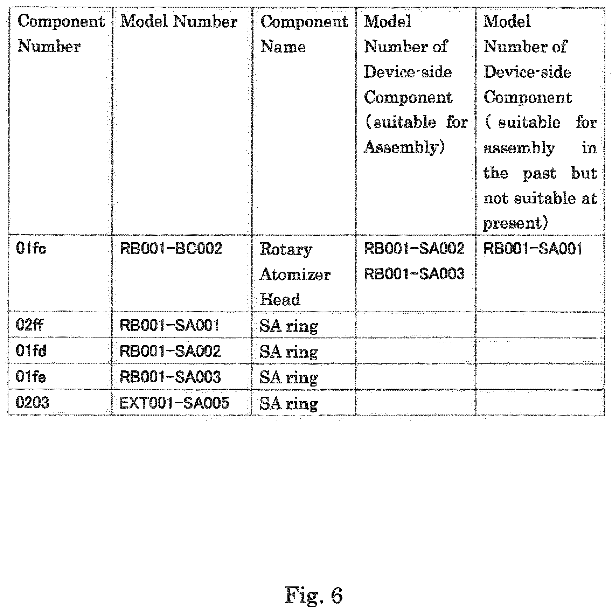

It should be noted that the model number recording unit 12a, the assembly suitable model number recording unit 12c, and the past assembly suitable model number recording unit 12e may be unified. FIG. 6 is a table for showing an example in which the model number recording unit 12a, the assembly suitable model number recording unit 12c, and the past assembly suitable model number recording unit 12e are unified.

A description will now be given of an operation of the embodiment of the present invention.

First, the IC tag reader 10 reads the component number from the component information recording unit 2a of the SA ring (device-side component) 2, and provides the assembly suitability determination device 12 with the component number.

The device-side component model number reading unit 12g of the assembly suitability determination device 12 reads the model number associated with the component number of the SA ring (device-side component) 2 from the model number recording unit 12a, and provides the assembly suitability determination unit 12h with the model number.

Referring to the example shown in FIG. 3, there are (1) a case in which the component number of the SA ring (device-side component) 2 is Olfd or 01fe, (2) a case in which the component number is 02ff, and (3) a case in which the component number is 0203.

(1) In the case in which the component number of the SA ring 2 is 01fd or 01fe, the model number of the SA ring 2 is RB001-SA002 or RB001-SA003 (assembly suitable model numbers). (2) In the case in which the component number of the SA ring 2 is 02ff, the model number of the SA ring 2 is RB001-SA001 (past assembly suitable model number). (3) In the case in which the component number of the SA ring 2 is 0203, the model number of the SA ring 2 is EXT001-SA005.

Then, the IC tag reader 10 reads the component number from the component information recording unit 1a of the rotary atomizer head (component) 1, and provides the assembly suitability determination device 12 with the component number. The assembly component model number reading unit 12b of the assembly suitability determination device 12 reads the model number associated with the component number of the rotary atomizer head (component) 1 from the model number recording unit 12a, and provides the assembly suitable model number reading unit 12d and the past assembly suitable model number reading unit 12f with the model number.

On this occasion, referring to the example of FIG. 3, it is assumed that the component number of the rotary atomizer head (component) 1 is 01fc. Then, the model number RB001-BC002 of the rotary atomizer head (component) 1 is provided for the assembly suitable model number reading unit 12d and the past assembly suitable model number reading unit 12f.

On this occasion, referring to FIG. 4, the assembly suitable model number reading unit 12d reads assembly suitable model numbers RB001-SA002 and RB001-SA003 corresponding to the model number RB001-BC002 of the rotary atomizer head (component) 1 from the assembly suitable model number recording unit 12c, and provides the assembly suitability determination unit 12h with the assembly suitable model numbers.

Further, referring to FIG. 5, the past assembly suitable model number reading unit 12f reads the past assembly suitable model number RB001-SA001 corresponding to the model number RB001-BC002 of the rotary atomizer head (component) 1 from the past assembly suitable model number recording unit 12e, and provides the assembly suitability determination unit 12h with the past assembly suitable model number.

On this occasion, the operation of the assembly suitability determination unit 12h varies depending on the model number of the SA ring 2, and a description will now be given of the respective cases.

### (1) In the case in which the model number of the SA ring 2 is RB001-SA002 or RB001-SA003

The model number of the SA ring 2 is the assembly suitable model number, and the assembly suitability determination unit 12h thus determines that the rotary atomizer head (component) 1 is suitable for the assembly.

### (2) In the case in which the model number of the SA ring 2 is RB001-SA001

The model number of the SA ring 2 is not the assembly suitable model number, and the assembly suitability determination unit 12h thus determines that the rotary atomizer head (component) 1 is not suitable for the assembly. It should be noted that the model number of the SA ring 2 is the past assembly suitable model number, the assembly suitability determination unit 12h thus determines that the rotary atomizer head (component) 1 is not suitable for the assembly, but was suitable for the assembly in the past.

If the rotary atomizer head 1 was suitable for the assembly to the SA ring 2 in the past, the rotary atomizer head 1 can often be assembled to the SA ring 2 still at present, but is not optimal for the painting, and may cause defective painting. However, the assembly is often possible, and it is thus often the case that a user of the paint device does not understand that the rotary atomizer head is not optimal for the paining. Thus, such a determination that (not suitable, but) "was suitable in the past" can promote such understanding of the user of the paint device that the rotary atomizer head can be assembled, but is not optimal for the painting.

### (3) In the case in which the model number of the SA ring 2 is EXT001-SA005

The model number of the SA ring 2 is not the assembly suitable model number, and the assembly suitability determination unit 12h thus determines that the rotary atomizer head (component) 1 is not suitable for the assembly. Moreover, the model number of the SA ring 2 is not the past assembly suitable model number, and the assembly suitability determination unit 12h thus simply determines that the rotary atomizer head (component) 1 is not suitable for the assembly.

Further, there may be provided such a configuration that the recording units 12a, 12c, and 12e in FIG. 2 are provided in a remote datacenter independent of the assembly suitability determination device 12, and the information is communicated between the assembly suitability determination device 12 and the recording units 12a, 12c, and 12e over the Internet.

According to the embodiment of the present invention, the suitability of the assembly of a certain component to the paint device can be determined.

Moreover, the embodiment can be realized in the following way. A computer is provided with a CPU, a hard disk, and a media (such as a floppy disk (registered trade mark) and a CD-ROM) reader, and the media reader is caused to read a medium recording a program realizing the respective components of the assembly suitability determination device 12, thereby installing the program on the hard disk. The above-described functions can also be realized in this way.
- 1: Rotary Atomizer Head
- 2: SA ring
- 1a, 2a: Component Information Recording Unit
- 5: Body Unit
- 10: IC Tag Reader
- 12: Assembly Suitability Determination Device

## Claims

1. An assembly suitability determination device for determining suitability of assembly of a component to a paint device, comprising:
an assembly suitability information recording unit that records model information representing a model of the component and model information representing a model of a device-side component that receives the component on the paint device, and is suitable for the assembly of the component while associating the model information on the component with the model information on the device-side component; and
an assembly suitability determination unit that determines the suitability of the assembly based on the model information on the component, the model information on the device-side component, and a recorded content of the assembly suitability information recording unit.

2. The assembly suitability determination device according to claim 1, comprising a past assembly suitability information recording unit that records the model information representing the model of the component and model information representing a model of a device-side component that receives the component on the paint device, and was previously suitable, but is not presently suitable for the assembly of the component while associating the model information on the component with the model information on the device-side component, wherein the assembly suitability determination unit determines the suitability of the assembly based on the model information on the component, the model information on the device-side component, and a recorded content of the past assembly suitability information recording unit.

3. The assembly suitability determination device according to claim 1 or 2, wherein:
the component and the device-side component each comprises a component information recording unit that records component information for identifying the component; and
the component information is provided from the component information recording unit to the assembly suitability determination device via wireless communication.

4. The assembly suitability determination device according to claim 1 or 2, wherein the component is a rotary atomizer head.

5. An assembly suitability determination method of determining suitability of assembly of a component to a paint device, comprising:
recording model information representing a model of the component and model information representing a model of a device-side component that receives the component on the paint device, and is suitable for the assembly of the component while associating the model information on the component with the model information on the device-side component; and
determining the suitability of the assembly based on the model information on the component, the model information on the device-side component, and a recorded content of the recording.

6. A program of instructions for execution by a computer to perform an assembly suitability determination process of determining suitability of assembly of a component to a paint device, said assembly suitability determination process comprising:
recording model information representing a model of the component and model information representing a model of a device-side component that receives the component on the paint device, and is suitable for the assembly of the component while associating the model information on the component with the model information on the device-side component; and
determining the suitability of the assembly based on the model information on the component, the model information on the device-side component, and a recorded content of the recording.

7. A non-transitory computer-readable medium having a program of instructions for execution by a computer to perform an assembly suitability determination process of determining suitability of assembly of a component to a paint device, said assembly suitability determination process comprising:
recording model information representing a model of the component and model information representing a model of a device-side component that receives the component on the paint device, and is suitable for the assembly of the component while associating the model information on the component with the model information on the device-side component; and
determining the suitability of the assembly based on the model information on the component, the model information on the device-side component, and a recorded content of the recording.

8. A paint device comprising a component, wherein the component comprises a component information recording unit that records component information for identifying the component so as to be read via wireless communication.
